# DEMANDE DE BREVET EUROPEEN

(11) **EP 4 089 558 A1**
(43) Date de publication de la demande: **16.11.2022**
(21) Numéro de dépôt: 22168528.2
(22) Date de dépôt: 14.04.2022
(51) Int. Cl.: G06F 21/54, G06F 21/55

(54) **PROCÉDÉ D'EXÉCUTION D'UN CODE MACHINE PAR UN MICROPROCESSEUR**

(30) Priorité: 10.05.2021 FR 2104896
(71) Demandeur: COMMISSARIAT À L'ÉNERGIE ATOMIQUE ET AUX ÉNERGIES ALTERNATIVES, 75015 Paris (FR)
(72) Inventeur: LEPLUS, Gaetan, 38054 Grenoble Cedex 09 (FR); SAVRY, Olivier, 38054 Grenoble Cedex 09 (FR)
(74) Mandataire: INNOV-GROUP

(57) **Abrégé**

Ce procédé d'exécution d'un code machine par un microprocesseur comporte :
- après une opération de décodage d'une instruction chargée courante, la construction (164) d'un masque à partir des signaux générés par un décodeur d'instructions en réponse au décodage de cette instruction chargée courante par ce décodeur, ce masque construit variant ainsi en fonction de l'instruction chargée courante, puis
- avant une opération de décodage d'une prochaine instruction chargée, le démasquage (162) de la prochaine instruction chargée à l'aide du masque construit.

## Description

L'invention concerne un procédé d'exécution d'un code machine par un microprocesseur ainsi que le code machine exécuté par ce procédé. L'invention concerne également :
- un support d'enregistrement d'informations et un microprocesseur pour la mise en œuvre de ce procédé d'exécution, et
- un compilateur pour générer ce code machine.

Pour obtenir des informations sur un code machine ou provoquer un fonctionnement inattendu du code machine, il est connu de le soumettre à des attaques connues sous le terme d'« injection de fautes » ou « fault attack » en anglais. Ces attaques consistent à perturber le fonctionnement du microprocesseur lors de l'exécution du code machine par divers moyens physiques comme des modifications des tensions d'alimentation, des modifications du signal d'horloge, l'exposition du microprocesseur à des ondes électromagnétiques et autres.

À l'aide de telles perturbations, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Une attaque par injection de fautes peut provoquer une altération du fonctionnement du microprocesseur, par exemple, par des modifications des instructions qui sont exécutées par l'unité arithmétique et logique. Pour cela, il est fréquent que les fautes injectées visent à perturber le fonctionnement du décodeur d'instructions du microprocesseur pour produire des instructions fautées. L'injection de faute peut aussi chercher à perturber le fonctionnement de l'unité arithmétique et logique du microprocesseur.

Lorsque la perturbation du décodeur empêche seulement l'exécution d'une ou plusieurs des instructions du code machine ou lorsque l'altération a un effet sur le processeur équivalent au fait de ne pas exécuter l'instruction fautée, on parle alors de saut d'instructions. Lorsque la perturbation du décodeur conduit à remplacer une ou plusieurs des instructions du code machine par d'autres instructions exécutables par le microprocesseur, on parle alors de remplacement d'instructions.

Lorsque la perturbation du décodeur modifie une instruction de branchement ou lorsque la perturbation de l'unité arithmétique et logique consiste à sauter une instruction de branchement, on observe un effet de détournement du flot de contrôle. Le flot de contrôle correspond au chemin d'exécution suivi lors de l'exécution du code machine. Le flot de contrôle est classiquement représenté sous la forme d'un graphe orienté connu sous le terme de graphe de flot de contrôle ou « control flow graph » en anglais. L'effet de détournement du flot de contrôle peut être observé quand une instruction de branchement est altérée ou quand la condition impliquée dans un branchement conditionnel est modifiée ou quand l'adresse de retour d'une fonction est modifiée.

Pour rendre l'exécution du code machine plus robuste vis-à-vis de telles altérations, il a déjà été proposé d'instrumenter le code machine pour y inclure des instructions qui permettent de détecter ces altérations lorsqu'elles se produisent. Par exemple, la demande US20200272475 décrit une telle solution. Cette solution fonctionne bien mais nécessite d'ajouter de nombreuses instructions dans le code machine. De plus, elle ne permet pas nécessairement de détecter une altération d'une instruction qui intervient au moment du décodage de cette instruction par le microprocesseur.

De l'état de la technique est également connu de EP3736719A1 et de l'article suivant : Savry Olivier et Al : "Confidaent : Control Flow protection with Instruction and Data Autenticated Encryption", 23RD EUORMICRO Conférence On Digital System Design, 2020-08-06, pages 246-253. Cet état de la technique ne permet pas non plus de détecter une altération d'une instruction qui intervient au moment du décodage de cette instruction par le microprocesseur.

L'invention vise à proposer un procédé d'exécution d'un code machine qui permet de signaler une altération d'une instruction, un saut d'instruction et une altération du fonctionnement du décodeur d'instructions du microprocesseur. Elle a donc pour objet un tel procédé d'exécution d'un code machine conforme à la revendication 1.

L'invention a également pour objet un code machine conforme à la revendication 7.

L'invention a également pour objet un support d'enregistrement d'informations lisible par un microprocesseur, ce support d'enregistrement d'informations contenant le code machine ci-dessus.

L'invention a également pour objet un microprocesseur pour la mise en œuvre du procédé d'exécution ci-dessus.

Enfin, l'invention a également pour objet un compilateur apte à transformer automatiquement un code source d'un programme d'ordinateur en un code machine revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code machine;
- la figure 2 est une illustration schématique de l'architecture d'une chaîne de traitement de l'appareil de la figure 1;
- la figure 3 est un organigramme d'un procédé d'exécution du code machine à l'aide de la chaîne de traitement de la figure 2;
- la figure 4 est une illustration schématique d'un compilateur apte à générer le code machine exécuté par l'appareil de la figure 1.

### CHAPITRE I : Notations et définitions

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé, par un compilateur, en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

La « valeur d'une instruction » est une valeur numérique obtenue, à l'aide d'une fonction bijective, à partir de la succession de « 0 » et de « 1 » qui code, en langage machine, cette instruction. Cette fonction bijective peut être la fonction identité.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable. Le code machine comporte une succession d'instructions classées les unes après les autres et qui forme, dans le code machine, une suite ordonnée d'instructions. Le code machine débute par une instruction initiale et se termine par une instruction finale. Par rapport à une instruction Iᵢ donnée du code machine, l'instruction Iᵢ₋₁ située du côté de l'instruction initiale est appelée « instruction précédente » et l'instruction Iᵢ₊₁ situées du côté de l'instruction finale, est appelées « instruction suivante ». L'indice "i" est le numéro d'ordre de l'instruction Iᵢ dans le code machine. Dans ce texte, ce code machine est découpé en une succession de blocs de base immédiatement consécutifs ou séparés par des blocs de données.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions exécutées les unes après les autres.

Dans ce texte, un « bloc de base » est un groupe d'instructions du code machine qui sont systématiquement exécutées les unes après les autres. Un bloc de base débute à une adresse de branchement et se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant.

Dans cette demande, l'expression « instruction de branchement » désigne une instruction de branchement explicite à défaut de mention contraire. Ainsi, l'exécution d'un bloc de base débute systématiquement par l'exécution de l'instruction située à son adresse de branchement et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes exécutées par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement» est une instruction qui, lorsqu'elle est exécutée par le microprocesseur, déclenche un saut vers l'adresse de branchement d'un autre bloc de base. Cette instruction de branchement comporte donc au moins comme paramètre l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale, c'est-à-dire dans l'ordre de leur indice "i". L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en langage assembleur pour les microprocesseurs de la série x86. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA » ou « JNE » en assembleur. L'instruction de branchement peut aussi bien être un appel à une fonction. Dans ce texte, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

Une « adresse de branchement » est l'adresse dans la mémoire principale à laquelle se trouve la première instruction exécutée d'un bloc de base. Par la suite, on parle d'adresse de branchement même pour les blocs de base dont la première instruction est exécutée suite à l'exécution d'une instruction de branchement implicite.

On parle d'exécution d'une fonction pour désigner l'exécution des instructions réalisant cette fonction.

### CHAPITRE II : Exemples de mode de réalisation

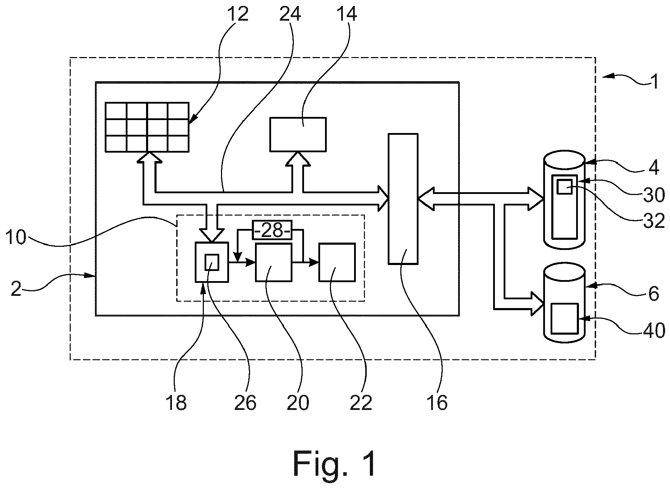

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique, une carte à puce ou similaire.

Le microprocesseur 2 comporte ici :
- une chaîne matérielle 10 de traitement des instructions à exécuter;
- un ensemble 12 de registres ;
- un module de commande 14, et
- une interface 16 d'entrée/sortie de données.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est, par exemple, réalisée sur un substrat mécaniquement séparé du substrat sur lequel sont réalisés les différents éléments du microprocesseur 2 comme la chaîne 10.

Dans cet exemple de réalisation le code binaire 30 comporte notamment un code machine 32.

A titre d'illustration, le microprocesseur 2 est conforme à l'architecture ARM (« Advanced Risk Machine ») version 7 et supporte les jeux d'instructions tels que Thumb1 et/ou Thumb2. Un jeu d'instructions définit de façon limitative la syntaxe des instructions que le microprocesseur 2 est capable d'exécuter. Ce jeu d'instructions définit donc notamment l'ensemble des opcodes possibles pour une instruction. La syntaxe d'une instruction est incorrecte si sa syntaxe ne correspond à aucune des syntaxes possibles pour une instruction exécutable par le microprocesseur 2. Par exemple, si la plage de bit d'une instruction I_{d} qui correspond à la plage de bit utilisée pour coder l'Opcode de l'instruction contient une valeur qui est différente de toutes les valeurs possibles pour un Opcode, alors sa syntaxe est incorrecte.

La chaîne 10 est plus connue sous le terme anglais de "pipeline". La chaîne 10 permet de commencer à exécuter une instruction du code machine alors que le traitement, par la chaîne 10, de la précédente instruction de ce code machine n'est pas encore terminé. De telles chaînes de traitement sont bien connues et seuls les éléments de la chaîne 10 nécessaires à la compréhension de l'invention sont décrits plus en détail.

La chaîné 10 comporte typiquement les étages suivants:
- un chargeur 18 d'instructions,
- un décodeur 20 d'instructions, et
- une unité arithmétique et logique 22 qui exécute les instructions.

Le chargeur 18 charge la prochaine instruction à exécuter par l'unité 22 à partir de la mémoire 4. Plus précisément, le chargeur 18 charge l'instruction du code machine 32 sur laquelle pointe un compteur ordinal 26. Sauf si sa valeur est modifiée par l'exécution d'une instruction de branchement, la valeur du compteur ordinal 26 est incrémentée d'un pas régulier à chaque cycle d'une horloge du microprocesseur. Le pas régulier est égal à l'écart entre les adresses de deux instructions immédiatement consécutives dans le code machine 32. Ce pas est par la suite appelé "pas unitaire".

Le décodeur 20 décode l'instruction chargée par le chargeur 18 pour obtenir des signaux de configuration qui configurent le microprocesseur 2 pour qu'il exécute, au prochain cycle d'horloge, l'instruction chargée. Un de ces signaux de configuration code la nature de l'opération à exécuter par l'unité 22. Ce signal de configuration correspond à l'opcode de l'instruction chargée. D'autres signaux de configuration indiquent, par exemple, si l'instruction chargée est une instruction de chargement d'une donnée depuis la mémoire 4 ou d'écriture d'une donnée dans la mémoire 4. Ces signaux de configuration sont transmis à l'unité 22. D'autres signaux de configuration comportent les valeurs des opérandes chargées. Selon l'instruction à exécuter, ces signaux sont transmis à l'ensemble 12 de registres ou à l'unité 22.

Lorsque le décodeur 20 n'arrive pas à décoder une instruction, il génère un signal d'erreur. Typiquement, cela se produit si la syntaxe de l'instruction chargée est incorrecte.

L'unité 22 exécute les unes après les autres les instructions chargées. L'unité 22 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Une instruction Iᵢ donnée du code machine doit successivement être traitée, dans l'ordre, par le chargeur 18, le décodeur 20 et l'unité 22. De plus, le chargeur 18, le décodeur 20 et l'unité 22 sont capables de travailler en parallèle les uns des autres. Ainsi, à un instant donné, le chargeur 18 peut être en train de charger l'instruction suivante Iᵢ₊₁, le décodeur 20 en train de décoder l'instruction Iᵢ et l'unité 22 en train d'exécuter la précédente instruction Iᵢ₋₁. La chaîne 10 permet ainsi de traiter en parallèle au moins trois instructions du code machine 30.

De plus, la chaîne 10 comporte un module matériel 28 de démasquage des instructions chargées par le chargeur 18.

Le module 28 est capable d'exécuter automatiquement les opérations suivantes :
1) en réponse au décodage, par le décodeur 20, d'une instruction Iᵢ, le module 28 construit un masque Mᵢ,
2) avant de commencer le décodage de l'instruction suivante Iᵢ₊₁, le module démasque l'instruction Iᵢ₊₁, à l'aide d'un masque courant M_{c} choisi dans le groupe composé du masque Mᵢ construit et d'un masque MJ de saut, avant de transmettre l'instruction démasquée au décodeur 20.

Pour réaliser l'opération 1) ci-dessus, le module 28 implémente et exécute une fonction pré-programmée F_{CM}(iᵢ). Pour réaliser l'opération 2) ci-dessus, le module 28 implémente et exécute une fonction pré-programmée F_{D}(i*ᵢ₊₁, M_{c}) de démasquage, où :
- M_{c} est le masque courant choisi dans le groupe composé du masque construit Mᵢ et du masque MJ de saut, et
- I*ᵢ₊₁ est l'instruction Iᵢ₊₁ masquée, c'est-à-dire telle qu'elle se présente avant d'être démasquée par le module 28.

Par la suite, la notation "I*" désigne l'instruction I masquée et la notation "I", sans le symbole "*", désigne l'instruction I en clair, c'est-à-dire le résultat de la fonction F_{D}(i*; M_{c}).

Ces fonctions F_{CM}() et F_{D}() sont des fonctions secrètes. A cet effet, il n'existe pas de code machine pour exécuter ces fonctions dans une mémoire située en dehors du microprocesseur 2. Typiquement, elles sont implémentées sous forme matérielle à l'intérieur du module 28.

La fonction F_{CM}() est une fonction qui construit le masque Mᵢ à partir des signaux de configuration générés par le décodeur 20 à l'occasion du décodage de l'instruction Iᵢ. Ici, le masque Mᵢ est codé sur le même nombre de bits que l'instruction Iᵢ.

Dans ce mode de réalisation, la fonction F_{D}() est une fonction qui combine chaque bit de l'instruction I*ᵢ₊₁ avec les bits situés aux mêmes emplacements dans le masque courant M_{c}. Ici, la fonction F_{D}() est définie par la relation suivante : Iᵢ₊₁ = I*ᵢ₊₁ XOR M_{c}, où le symbole "XOR" désigne l'opération logique "OU EXCLUSIF".

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2.

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le microprocesseur 2 comporte ici un bus 24 qui relie les différents composants du microprocesseur 2 entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

Le code machine 32 se compose d'une succession de blocs de base qui doivent être exécutés les uns après les autres.

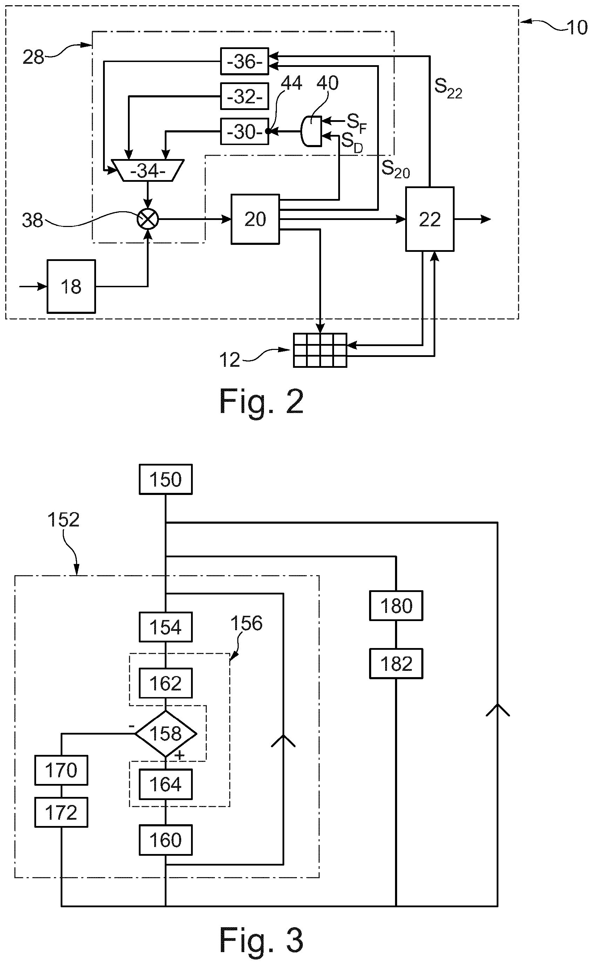

La figure 2 représente plus en détail un exemple de réalisation du module 28. Le module 28 comporte :
- un registre 30 dans lequel est enregistré le masque Mᵢ construit à partir des signaux de configuration générés par le décodeur 20 à l'issue du décodage de l'instruction Iᵢ,
- un registre 32 dans lequel est enregistré le masque MJ,
- un multiplexeur 34 comportant deux entrées pour recevoir, respectivement, le masque Mᵢ et le masque MJ,
- un circuit 36 de commande qui sélectionne, en fonction de différents signaux reçus, le masque courant M_{c}, parmi les masques Mᵢ et MJ, qui va être délivré sur la sortie du multiplexeur 34,
- une porte logique 38 qui exécute l'opération logique « OU EXCLUSIF » entre le masque courant M_{c} délivré sur la sortie du multiplexeur 34 et l'instruction Iᵢ₊₁ chargée par le chargeur 18, et
- une porte logique 40 qui exécute l'opération logique « NON-ET » ("NAND" en anglais) entre un signale SF et un signal S_{D} et délivre sur une sortie le résultat de cette opération logique.

Le signal SF est un signal booléen qui prend la valeur « 1 » lorsque le fonctionnement du décodeur 20 est interrompu pendant plusieurs cycles d'horloge. Une telle interruption est par exemple nécessaire pour attendre le résultat d'autres calculs, par exemple, réalisés par l'unité 22. Ce cas de figure se produit par exemple lorsqu'une instruction de branchement conditionnel est exécutée. En effet, dans ce cas, il n'est pas possible d'indiquer au chargeur 18 quelle est la prochaine instruction à charger tant que l'on ne sait pas si l'exécution de cette instruction de branchement conditionnel va provoquer ou non un saut de plusieurs instructions du code machine 32.

Le signal S_{D} est un signal booléen qui prend la valeur « 1 » lorsque le décodage de l'instruction est terminé et que les signaux de configuration sont prêts à être utilisés pour exécuter cette instruction.

Ainsi, le signal en sortie de la porte 40 prend la valeur « 0 » seulement lorsque le fonctionnement du chargeur 18 et du décodeur 20 est interrompu et que des signaux de configuration générés par le décodeur 20 sont prêts à être utilisés.

Une entrée 44 du registre 30 est raccordée à la sortie de la porte 40. Tant que cette entrée 44 reçoit un signal égal à « 1 », à chaque cycle d'horloge, le registre 30 enregistre la valeur des signaux de configuration générés par le décodeur 20. La valeur enregistrée dans le registre 30 est codée sur autant de bits qu'il y a de bits dans le masque Mᵢ. Ici, la valeur enregistrée dans le registre 30 est la valeur du masque Mᵢ construit en réponse au décodage de l'instruction Iᵢ par le décodeur 20. A l'inverse, lorsque l'entrée 44 reçoit un signal égal à « 0 », aucune nouvelle valeur n'est enregistrée dans le registre 30. Ainsi, dans ce dernier cas, le dernier masque Mᵢ construit est mémorisé pendant plusieurs cycles d'horloge et en particulier, tant que le signal SF est égal à « 1 ».

Le circuit 36 sélectionne le registre 32 si l'instruction décodée par le décodeur 20 est une instruction de branchement inconditionnel. Le circuit 36 sélectionne aussi le registre 32 si l'instruction exécutée par l'unité 22 est une instruction de branchement conditionnel qui, lorsqu'elle est exécutée, provoque un saut de plusieurs instructions du code machine. A cet effet, le circuit 36 reçoit, d'une part, un signal S₂₀ généré par le décodeur 20 et, d'autre part, un signal S₂₂ généré par l'unité 22. Le signal S20 permet au circuit 36 d'identifier l'instruction qui vient d'être décodée par le décodeur 20 et donc d'identifier s'il s'agit d'une instruction de branchement inconditionnel. Par exemple, le signal S₂₀ contient l'Opcode de l'instruction qui vient d'être décodée.

Le signal S22 prend une valeur particulière lorsque l'unité 22 vient d'exécuter une instruction de branchement conditionnel pour laquelle la condition est satisfaite. Dans ce cas, cela provoque un saut de plusieurs instructions du code machine. A l'inverse, ce signal S22 ne prend pas cette valeur particulière, cela signifie que la condition de l'instruction de branchement conditionnel n'est pas satisfaite. Dans ce dernier cas, la prochaine instruction exécutée par le microprocesseur est l'instruction qui suit immédiatement cette instruction de branchement conditionnel dans le code machine.

Lorsque le circuit 36 sélectionne le registre 32, alors il commande le multiplexeur 34 pour que celui-ci délivre sur sa sortie le contenu du registre 32, c'est-à-dire le masque MJ. A l'inverse, quand le circuit 36 sélectionne le registre 30, c'est le masque Mᵢ qui est délivré sur la sortie du multiplexeur 34.

La figure 3 représente un procédé d'exécution du code binaire 30 par le microprocesseur 2.

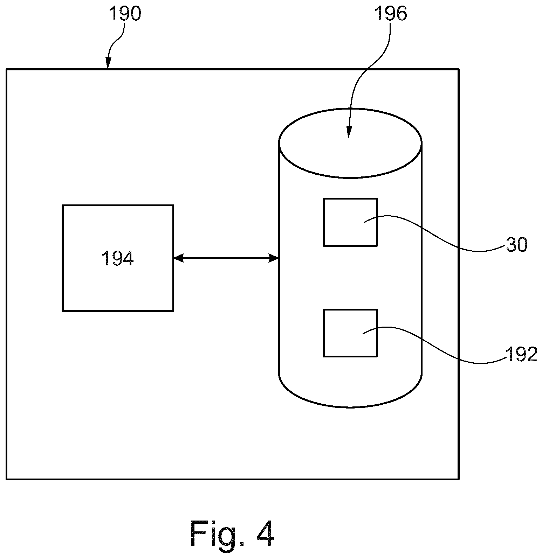

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4. Au préalable, ce code binaire 30 a été généré par le compilateur de la figure 4. Lors de la compilation, chaque instruction Iᵢ d'un code machine en clair a été transformée en une instruction masquée I*ᵢ correspondante à l'aide d'une fonction F_{M}() de masquage. La fonction F_{M}() est l'inverse de la fonction F_{D}(), c'est-à-dire qu'elle vérifie la relation suivante: Iᵢ = F_{D}(F_{M}(Iᵢ)). La fonction F_{M}() est définie par la relation suivante : I*ᵢ = F_{M}(Iᵢ; M_{c}), où M_{c} est le même masque courant que celui qui sera utilisé, par le module 28, lors de l'exécution de ce code machine 32 pour démasquer l'instruction I*ᵢ. Plus précisément, dans cet exemple, la fonction F_{M}() est définie par la relation suivante : I*ᵢ = Iᵢ XOR M_{c}. Un exemple de réalisation de la fonction F_{M}() est décrit plus en détail en référence à la figure 4.

Ensuite, lors d'une phase 152, le microprocesseur 2 exécute le code binaire 30 et, en particulier, le code machine 32.

Pour cela, pour chaque instruction I*ᵢ pointée par le compteur ordinal 26, la chaîne 10 exécute successivement les étapes suivantes :
- une étape 154 de chargement, par le chargeur 18, de l'instruction I*ᵢ pointée par la valeur actuelle du compteur ordinal 26, puis
- une étape 156 de démasquage, par le module 28, de l'instruction I*ᵢ chargée pour obtenir l'instruction Iᵢ en clair, puis
- une étape 158 de décodage, par le décodeur 20, de l'instruction Iᵢ en clair, puis
- une étape 160 d'exécution, par l'unité 22, de l'instruction Iᵢ décodée.

Les étapes 154, 158 et 160 sont typiquement exécutées chacune en un cycle d'horloge. De plus, elles peuvent être exécutées en parallèle pour différentes instructions successives du code machine 32. Ainsi, la chaîne 10 peut exécuter en parallèle :
- l'étape 154 pour une instruction I*ᵢ₊₁,
- l'étape 158 pour une instruction Iᵢ, et
- l'étape 160 pour une instruction Iᵢ₋₁.

Ainsi, la chaîne 10 permet d'exécuter une instruction par cycle d'horloge. Toutefois, comme indiqué précédemment, il existe des situations où il est nécessaire de geler l'exécution des étapes 154 et 158 pendant plusieurs cycles d'horloge. Dans ce cas, le signal SF est mis à "1" pendant toute la durée des cycles d'horloge où l'exécution des étapes 154 et 158 est gelée.

A l'issue de l'étape 158 de décodage de l'instruction Iᵢ, le décodeur 20 transmet au circuit 36 le signal S₂₀. Ce signal S₂₀ permet de détecter si l'instruction Iᵢ qui vient d'être décodée est une instruction de branchement inconditionnel.

De plus, lors de l'étape 158, si une instruction Iᵢ ne peut pas être décodée car sa syntaxe est incorrecte, le procédé se poursuit par une étape 170 de signalement d'une faute d'exécution. Lors de cette étape 170, le décodeur 20 déclenche le signalement d'une faute d'exécution.

En réponse à un tel signalement, lors d'une étape 172, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

Lors de l'étape 160, si l'instruction exécutée est une instruction de branchement conditionnel et si l'exécution de cette instruction provoque un saut de plusieurs instructions, alors l'unité 22 génère un signal S22 qui indique au circuit 36 que l'exécution de cette instruction de branchement conditionnel a provoqué un saut de plusieurs instructions.

Pour cela, typiquement, lors de l'exécution de l'instruction de branchement conditionnel, une condition est testée. Si cette condition n'est pas satisfaite, l'exécution de cette instruction de branchement conditionnel ne provoque aucun saut d'instruction. Dans ce cas, le compteur ordinal est simplement incrémenté d'un pas unitaire c'est-à-dire d'une seule instruction. C'est donc l'instruction suivante Iᵢ₊₁ du code machine 32 qui est exécutée. Dans ce cas, le signal S22 reste par exemple égal à « 0 ».

Si au contraire, la condition de l'instruction de branchement conditionnel est satisfaite, l'exécution de cette instruction par l'unité 22 provoque un saut de plusieurs instructions du code machine 32. Dans ce cas, typiquement, une nouvelle valeur est écrite dans le registre contenant le compteur ordinal. L'écart entre cette nouvelle valeur et la précédente valeur est supérieur à plusieurs fois le pas unitaire d'incrémentation du compteur ordinal. Dans ce dernier cas, le signal S22 prend par exemple la valeur « 1 ».

L'étape 156 est exécutée entre la fin de l'exécution de l'étape 158 pour l'instruction Iᵢ et avant le début de l'exécution de l'étape 158 pour la prochaine instruction Iₚ. La prochaine instruction Iₚ est :
- soit l'instruction suivante Iᵢ₊₁ lorsque l'exécution de l'instruction Iᵢ ne provoque pas un saut de plusieurs instructions,
- soit une autre instruction du code machine 32, différente de l'instruction Iᵢ₊₁, lorsque l'exécution de l'instruction Iᵢ provoque un saut de plusieurs instructions.

L'étape 156 comporte principalement une opération 164 de construction du masque Mᵢ et une opération 162 de démasquage de la prochaine instruction Iₚ chargée par le chargeur 18.

L'opération 164 est exécutée à chaque fois que le décodeur 20 a fini de décoder une instruction et que dans le même temps, le signal SF est égal à « 0 ».

Lors de l'opération 164, le module 28 enregistre dans le registre 30 les valeurs d'un ensemble prédéterminé de signaux de configuration du décodeur 20. De préférence, cet ensemble de signaux de configuration contient :
- le signal qui code l'Opcode de l'instruction Iᵢ qui vient d'être décodée, et
- les signaux qui codent les valeurs des opérandes de l'instruction Iᵢ.

Ici, l'enregistrement de ces signaux de configuration est déclenché, par exemple, à chaque fin d'un cycle d'horloge sauf si le signal SF est égal à « 1 ». Ainsi, un nouveau masque Mᵢ est construit à chaque fois qu'une nouvelle instruction Iᵢ est décodée par le décodeur 20. Ce nouveau masque Mᵢ varie en fonction de l'instruction décodée et, en particulier, en fonction de son opcode et des valeurs de ses opérandes. Étant donné que les instructions décodées les unes après les autres sont généralement différentes, le masque Mᵢ construit est différent à chaque exécution de l'opération 164.

Dans le cas où le signal SF est égal à « 1 », aucun nouveau signal de configuration n'est enregistré dans le registre 30 de sorte que le registre 30 mémorise la valeur du dernier masque Mᵢ construit.

L'opération 162 est exécutée à chaque fois que le décodeur 20 va décoder une nouvelle instruction I*ₚ chargée. Il est rappelé ici que puisque chaque instruction du code machine 32 est masquée, les instructions chargées sont masquées.

Lors de l'opération 162, le circuit 36 sélectionne d'abord, parmi les masques Mᵢ et MJ, enregistrés dans les registres 30 et 32, le masque qui doit être utilisé en tant que masque courant M_{c}. Plus précisément, le circuit 36 sélectionne le masque MJ seulement dans les deux cas suivants :
- cas 1 : le signal S₂₀ correspond au signal généré lorsque l'instruction Iᵢ qui vient d'être décodée par le décodeur 20 est une instruction de branchement inconditionnel, et
- cas 2 : le signal S22 reçu est égal à « 1 », ce qui signifie que l'instruction Iᵢ de branchement qui vient d'être exécutée par l'unité 22 a provoqué un saut de plusieurs instructions.

En dehors des deux cas ci-dessus, le circuit 36 sélectionne systématiquement le masque Mᵢ. Ici, pour sélectionner le masque MJ, le circuit 36 commande le multiplexeur 34 pour qu'il délivre sur sa sortie le contenu du registre 32. De façon similaire, pour sélectionner le masque Mᵢ, le circuit 36 commande le multiplexeur 34 pour délivrer, cette fois-ci, le contenu du registre 30 sur sa sortie. Ainsi, la sortie du multiplexeur 34 délivre le masque courant M_{c}.

Ensuite, la porte 38 exécute la fonction de démasquage F_{D}(I*ₚ; M_{c}). Ici, pour cela, la porte 38 exécute un « OU EXCLUSIF » entre les bits du masque M_{c} délivré sur la sortie du multiplexeur 34 et les bits correspondants de l'instruction chargée I* ₚ délivrée par le chargeur 18 au même instant. Le résultat de la fonction F_{D}(), c'est-à-dire l'instruction Iₚ en clair, est délivré en entrée du décodeur 20 pour être décodé lors du prochain cycle d'horloge.

Dès lors, lorsque l'instruction I*ᵢ décodée n'est pas une instruction de branchement, la prochaine instruction I*ₚ est démasquée à l'aide du masque Mᵢ, c'est-à-dire à l'aide d'un masque dont la valeur dépend de la valeur de la précédente instruction Iᵢ décodée. Si à ce moment-là, le décodeur 20 est soumis à une attaque par injection de fautes de sorte que les signaux de configuration générés ne correspondent pas à ceux attendus, c'est-à-dire à ceux correspondant à un décodage correct de l'instruction Iᵢ, alors le module 28 construit un masque M_{D} qui est différent du masque Mᵢ attendu. Ce masque M_{D} est ensuite utilisé pour démasquer la prochaine instruction I*ₚ. Comme le masque M_{D} est différent du masque Mᵢ attendu, l'instruction démasquée obtenue I_{D+1} est différente de l'instruction Iₚ en clair attendue. Il existe alors deux cas de figure :
- Cas 1 : L'instruction I_{D+1} est une instruction dont la syntaxe est incorrecte. Dans ce cas, le procédé se poursuit par l'étape 170.
- Cas 2 : L'instruction I_{D+1} est une instruction dont la syntaxe est correcte. Dans ce second cas, le décodage de l'instruction I_{D+1} ne provoque aucune erreur et le module 28 construit un nouveau masque M_{D+1} à partir des signaux de configuration générés en réponse au décodage de cette instruction I_{D+1.} Puisque l'instruction I_{D+1} décodée est différente de l'instruction Iₚ attendue, le masque M_{D+1} construit est différent du masque Mₚ attendu. Dès lors, l'exécution de l'opération 162 génère une instruction I_{D+2} différente de l'instruction Iₚ₊₁ attendue. A ce stade, comme cela vient d'être décrit précédemment, la syntaxe de cette instruction I_{D+2} peut être soit correcte soit incorrecte. Dès lors, il est pratiquement certain qu'après un certain nombre de cycles d'horloge, l'instruction décodée par le décodeur 20 est une instruction dont la syntaxe est incorrecte. Il est donc certain qu'après un certain nombre de cycles d'horloge, une faute d'exécution sera signalée.

Lorsqu'une instruction Iᵢ est la destination d'une instruction de branchement, c'est-à-dire qu'elle se trouve une adresse de branchement, il existe deux chemins pour arriver à cette instruction I_{i.} Le premier chemin arrive à l'instruction Iᵢ par un saut de plusieurs instructions lorsqu'une instruction de branchement inconditionnel est exécutée ou lorsque la condition d'une instruction de branchement conditionnel est satisfaite. Le second chemin correspond au cas où l'instruction Iᵢ₋₁ est exécutée puis le compteur ordinal est incrémenté du pas unitaire. Selon le chemin emprunté, l'instruction exécutée par le microprocesseur juste avant l'exécution de l'instruction Iᵢ n'est pas la même. Lorsque le premier chemin est emprunté, l'instruction précédente est une instruction de branchement. Lorsque le second est chemin est emprunté, l'instruction précédente est l'instruction I_{i-1.}

Ici, lors de la compilation, avant chaque instruction Iᵢ qui se trouve à une adresse de branchement, une instruction de branchement inconditionnel est insérée. Cette instruction de branchement inconditionnel provoque, lorsqu'elle est exécutée par le microprocesseur 2, un saut d'une instruction, c'est-à-dire que la valeur du compteur ordinal est remplacée par une valeur incrémentée d'un pas unitaire. Ainsi, dans le cas du code machine 32 généré par un tel compilateur, l'instruction Iᵢ₋₁ qui précède l'instruction Iᵢ est systématiquement une instruction de branchement inconditionnel qui provoque un saut vers l'instruction Iᵢ lorsqu'elle est exécutée par l'unité 22.

Dès lors, quel que soit le chemin emprunté pour arriver à l'instruction I_{i,} l'instruction exécutée juste avant cette instruction Iᵢ est une instruction de branchement. Dans le cas où c'est le premier chemin qui est emprunté, l'instruction de branchement peut être une instruction de branchement inconditionnel ou une instruction de branchement conditionnel. Ici, l'instruction de branchement inconditionnel est détectée par le circuit 36 à partir du signal S₂₀ généré par le décodeur 20. Dans le cas d'une instruction de branchement conditionnel, le fait que son exécution provoque un saut de plusieurs instructions est détecté à partir du signal S22 généré par l'unité 22. Il faut noter que dans ce dernier cas, après le décodage de l'instruction de branchement conditionnel, le fonctionnement du chargeur 18 et du décodeur 20 est gelé. En effet, tant que l'instruction de branchement conditionnel n'a pas été exécutée par l'unité 22, il n'est pas possible de savoir si la condition est satisfaite ou non et donc de connaître quelle sera la prochaine instruction à charger par le chargeur 18. Ainsi, le fonctionnement du chargeur 18 reprend uniquement après l'exécution de l'instruction de branchement conditionnel c'est-à-dire à un instant où l'adresse de la prochaine instruction Iₚ à exécuter est connue.

L'instruction de branchement exécutée lorsque le premier chemin est emprunté est différente de l'instruction de branchement exécutée lorsque le second chemin est emprunté. Toutefois, dans les deux cas, le circuit 36 sélectionne le masque MJ comme masque courant M_{c} à utiliser pour démasquer l'instruction I_{i.} Comme ce masque MJ est le même pour toutes les instructions de branchement, l'instruction I*ᵢ peut être correctement démasquée quel que soit le chemin emprunté pour arriver à cette instruction.

L'exécution du code machine 32 peut être interrompue pendant plusieurs cycles d'horloge. Par exemple, cela se produit lorsque l'exécution du code machine 32 est interrompue pour exécuter, à la place, un autre code machine. Dans ce cas, lors d'une étape 180, le microprocesseur 2 sauvegarde dans l'ensemble 12 ou dans la mémoire 4, le contexte d'exécution du code machine 32. Le contexte d'exécution comporte toutes les informations nécessaires pour que le microprocesseur 2 puisse reprendre ultérieurement l'exécution de ce code machine 32 à l'emplacement de l'instruction où son exécution s'est arrêtée. L'étape 180 comporte notamment la sauvegarde de la valeur actuelle du masque Mᵢ contenu dans le registre 30 et du masque courant sélectionné par le circuit 36.

Après plusieurs cycles d'horloge, l'exécution du code machine 32 par le microprocesseur 2 est reprise à partir de l'emplacement de l'instruction où cette exécution avait été interrompue. A cette occasion, lors d'une étape 182, le contexte d'exécution est restauré. Cette étape 182 comporte notamment l'écriture, dans le registre 30, du masque Mᵢ sauvegardé lors de l'étape 180. Elle comporte aussi la restauration de l'état du circuit 36 pour que celui-ci sélectionne le même masque M_{c} que celui qui aurait été sélectionné si l'exécution du code machine 32 n'avait pas été interrompue. Lorsque l'interruption de l'exécution du code machine 32 est provoquée par la nécessité d'exécuter un autre code machine, dans ce cas, cet autre code machine est exécuté entre les étapes 180 et 182.

Le même principe de sauvegarde du masque Mᵢ et de l'état du circuit 36 est mis en œuvre lorsque l'interruption de l'exécution du code machine 32 est provoquée par une interruption matérielle.

La figure 4 représente un compilateur 190 apte à générer automatiquement le code machine 32 à partir d'un code source 192. À cet effet, le compilateur 190 comporte typiquement un microprocesseur 194 programmable et une mémoire 196. La mémoire 196 contient les instructions et les données nécessaires pour, lorsqu'elles sont exécutées par le microprocesseur 194, générer automatiquement le code machine 32 à partir du code source 192. En particulier, la compilation du code source 192 comporte les étapes suivantes, :
a) le compilateur réalise une compilation initiale du code source 192 pour obtenir un code machine en clair dans lequel les instructions Iᵢ ne sont pas masquées, puis
b) le compilateur 190 repère, dans le code machine en clair, les instructions qui se trouvent à une adresse de branchement, puis
c) avant chacune de ces instructions repérées, le compilateur 190 insère automatiquement une instruction de branchement inconditionnel qui, lorsqu'elle est exécutée par le microprocesseur 2, provoque un saut vers l'instruction repérée, puis
d) le compilateur génère le code machine 32, c'est-à-dire un code machine dans lequel chaque instruction lᵢ est remplacée par l'instruction masquée l*ᵢ correspondante.

L'étape c) consiste à remplacer chaque instruction de branchement implicite par une instruction de branchement explicite. Dès lors, suite à l'étape c), l'instruction exécutée avant chaque instruction repérée est systématiquement une instruction de branchement.

Par exemple, pour réaliser l'étape d), le compilateur parcourt le code machine obtenu à l'issue de l'étape c) dans l'ordre croissant des instructions Iᵢ. Pour chaque instruction Iᵢ en clair rencontrée, il construit le masque M_{c} à utiliser pour obtenir l'instruction masquée I*ᵢ correspondante. Le masque M_{c} construit par le compilateur 190 est le même que celui qui est construit par le module 28 pour démasquer l'instruction I*ᵢ lors de l'exécution du code machine par le microprocesseur 2. Pour cela, par exemple, le compilateur 190 implémente un émulateur logiciel qui reproduit le fonctionnement de la chaîne 10 et, en particulier, du décodeur 20 et du module 28. Par exemple, pour chaque instruction Iᵢ₊₁ du code machine en clair :
- l'émulateur sélectionne, en tant que masque M_{c}, le masque MJ si l'instruction précédente Iᵢ est une instruction de branchement, sinon
- l'émulateur produit les mêmes signaux de configuration que ceux générés par le décodeur 20 lorsqu'il a fini de décoder l'instruction précédente Iᵢ puis il construit le masque Mᵢ à partir de ces signaux, le masque M_{c} construit est alors pris égal au masque Mᵢ construit.

Une fois le masque M_{c} construit, le compilateur 190 obtient l'instruction masquée I*ᵢ₊₁ à l'aide de la relation I*ᵢ₊₁ = F_{M}(Iᵢ₊₁; M_{c}), c'est-à-dire dans cet exemple à l'aide de la relation suivante : I*ᵢ₊₁ = Iᵢ₊₁ XOR M_{c}.

### CHAPITRE III : Variantes

### Variantes de l'appareil :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

En variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

### Variantes du masquage et du démasquage:

Dans un mode de réalisation simplifié, le masque Mᵢ est construit uniquement à partir du signal de configuration qui code l'opcode de l'instruction Iᵢ ou uniquement à partir du signal de configuration qui varie en fonction de la ou des valeurs des opérandes de l'instruction Iᵢ.

D'autres fonctions F_{D}() sont possibles. Par exemple, la fonction F_{D}() est définie par la relation suivante : iᵢ = i*ᵢ modulo M_{c}, où "modulo" est l'opération de l'arithmétique modulaire qui au couple (a, b) d'entiers, associe le reste de la division euclidienne de a par b. La fonction F_{D}() peut aussi être définie par la relation suivante : iᵢ = i*ᵢ XOR M_{c} XOR kₛ, où kₛ est une clé secrète connue seulement du microprocesseur 2. Si la puissance de calcul le permet, la fonction F_{D}() peut aussi être une fonction de chiffrement, par exemple, symétrique. Dans ce dernier cas, le masque M_{c} est plus connu sous le terme de "clé de déchiffrement". A chaque fois que la fonction F_{D}() est modifiée, la fonction F_{M}() doit être adaptée en conséquence.

La fonction F_{D}() peut être différente selon que le masque utilisé pour le démasquage de la prochaine instruction I*ₚ est le masque MJ ou le masque Mᵢ. Par exemple, lorsque c'est le masque MJ qui est sélectionné, la fonction "XOR" est remplacée par une autre fonction, telle qu'une fonction de déchiffrement qui utilise les bits du masque MJ pour déchiffrer l'instruction I*ₚ. L'émulateur du compilateur 190 doit alors être adapté pour tenir compte de ce fonctionnement.

Dans le cas d'un code machine dépourvu d'instructions de branchement, le masque MJ et son utilisation sont omis.

En variante, seules certaines instructions du code machine sont masquées. Par exemple, pour cela, une instruction spécifique est ajoutée au jeu d'instructions du microprocesseur 2. Lorsque cette instruction spécifique est exécutée par l'unité 22, elle indique au microprocesseur que les T prochaines instructions ne sont pas des instructions masquées et ne doivent donc pas être démasquées. Typiquement, le nombre T est un nombre entier supérieur ou égal à 1 ou 10 ou 100.

Selon une autre variante, c'est un bit spécifique d'un registre de statut ou de contrôle du microprocesseur 2 qui indique si l'instruction chargée est ou non une instruction masquée. Plus précisément, lorsque ce bit spécifique prend une valeur prédéterminée, l'instruction chargée est démasquée par le module 28. Si ce bit spécifique prend une valeur différente de cette valeur prédéterminée, alors l'instruction chargée n'est pas démasquée par le module 28.

Les différents modes de réalisation décrits ici peuvent être combinés entre eux.

### CHAPITRE IV : Avantages des modes de réalisation décrits

Les modes de réalisation décrits ici permettent de déclencher le signalement d'une faute d'exécution en cas de modification d'une instruction, de saut d'instructions ou d'erreur dans le décodage de l'instruction. Une telle faute d'exécution est aussi signalée si l'exécution d'une instruction de branchement conditionnel est perturbée. En effet, dans ce cas, le masque M_{c} utilisé pour démasquer la prochaine instruction I*ₚ n'est pas le bon puisque, suite à l'exécution de l'instruction précédente de branchement conditionnel, ce n'est pas le chemin prévu qui a été suivi. Ainsi, le procédé décrit permet aussi de détecter une altération du flot de contrôle.

Les modes de réalisation décrits ici présentent aussi les avantages suivants :
- le module 28 est simple à implémenter,
- le surcoût en terme de taille du code machine est très faible puisque que seuls des instructions de branchement inconditionnel supplémentaires sont ajoutées dans le code machine,
- le fait que les instructions du code machine soient démasquées uniquement avant leur décodage renforce la robustesse de microprocesseur 2 vis-à-vis des attaques par canaux auxiliaires ("Side-Channel Attack" en anglais),
- les instructions du code machine ne sont pas enregistrées en clair dans la mémoire principale ce qui rend plus difficile le désassemblage de ce code machine.

Le fait d'utiliser le masque MJ en tant que masque courant M_{c} à chaque fois que l'instruction précédente est une instruction de branchement permet la mise en œuvre du procédé décrit même dans le cas où le code machine comporte des instructions de branchement.

Le fait de mémoriser le masque construit Mᵢ dans le registre 30 tant que l'exécution du chargeur 18 et du décodeur 20 est gelée, permet la mise en œuvre du procédé décrit même si le fonctionnement du chargeur 18 et du décodeur 20 est gelé pendant plusieurs cycles d'horloge.

La sauvegarde du masque construit Mᵢ en cas d'interruption de l'exécution du code machine, permet d'interrompre l'exécution de ce code machine puis de la reprendre ultérieurement.

Le fait que la fonction F_{D}() soit une simple porte "OU EXCLUSIF" simplifie et accélère la mise en œuvre du démasquage.

## Revendications

1. Procédé d'exécution d'un code machine par un microprocesseur comportant une chaîne matérielle de traitement d'instructions, cette chaîne matérielle de traitement comportant les étages suivants : un chargeur d'instructions, un décodeur et une unité arithmétique et logique, ce procédé comportant, pour chaque instruction du code machine à exécuter, successivement les opérations suivantes :
- le chargement (154), par le chargeur d'instructions, de l'instruction désignée par un compteur ordinal pour obtenir une instruction chargée, puis
- le décodage (158) de l'instruction chargée, par le décodeur, pour générer des signaux qui configurent le microprocesseur pour exécuter l'instruction chargée, puis,
- l'exécution (160), par l'unité arithmétique et logique, de l'instruction chargée, **caractérisé en ce que** le procédé comporte également les opérations suivantes :
- après l'opération de décodage d'une instruction chargée courante, la construction (164) d'un masque à partir des signaux générés par le décodeur en réponse au décodage de cette instruction chargée courante, ce masque construit variant ainsi en fonction de l'instruction chargée courante, puis
- avant l'opération de décodage de la prochaine instruction chargée, le démasquage (162) de la prochaine instruction chargée à l'aide du masque construit.

2. Procédé selon la revendication 1, dans lequel :
- en réponse à la détection qu'une instruction chargée est une instruction de branchement qui, lorsqu'elle est exécutée par l'unité arithmétique et logique, remplace la valeur d'un compteur ordinal par une nouvelle valeur, cette nouvelle valeur étant fonction des opérandes de cette instruction de branchement, le procédé comporte le démasquage (162) de la prochaine instruction chargée à l'aide d'un masque de saut préenregistré constant et identique pour toutes les instructions de branchement exécutées par le microprocesseur, et
- en réponse à l'absence de détection que l'instruction chargée est une instruction de branchement, le procédé comporte le démasquage (162) de la prochaine instruction chargée à l'aide du masque construit.

3. Procédé selon l'une quelconque des revendications précédentes, dans lequel le procédé comporte :
- le gèle de l'exécution de l'opération de décodage pendant un ou plusieurs cycles d'une horloge du microprocesseur, et
- en réponse au gèle de l'exécution de l'opération de décodage, le procédé comporte la mémorisation du masque construit dans un registre, et
- lorsque l'exécution de l'opération de décodage reprend, la prochaine instruction chargée est démasquée à l'aide du masque construit enregistré dans ce registre.

4. Procédé selon l'une quelconque des revendications précédentes, dans lequel le procédé comporte :
- en réponse à l'interruption de l'exécution du code machine, appelé "premier code machine", et au déclenchement de l'exécution d'un second code machine, le procédé comporte la sauvegarde (180) du contexte d'exécution du premier code machine, cette sauvegarde du contexte d'exécution du premier code machine comportant la sauvegarde du masque construit, puis
- en réponse à la reprise de l'exécution du premier code machine et à l'interruption de l'exécution du second code machine, le procédé comporte la restauration (182) du contexte d'exécution du premier code machine, cette restauration du contexte d'exécution du premier code machine comportant l'écriture, dans un registre du microprocesseur, du masque construit sauvegardé, puis
- le démasquage de la prochaine instruction chargée suite à la reprise de l'exécution du premier code machine à l'aide du masque construit écrit dans ce registre.

5. Procédé selon l'une quelconque des revendications précédentes, dans lequel le démasquage de l'instruction chargée à l'aide du masque construit consiste en la réalisation d'un "OU EXCLUSIF" entre les bits de l'instruction chargée et les bits du masque construit.

6. Procédé selon l'une quelconque des revendications précédentes, dans lequel les signaux générés par le décodeur en réponse au décodage de l'instruction chargée courante sont des signaux qui varient en fonction de l'opcode de l'instruction chargée courante.

7. Code machine exécutable par un microprocesseur, ce code machine comprenant au moins un bloc de base comportant uniquement des instructions à exécuter systématiquement les unes après les autres,
**caractérisé en ce que** chaque instruction de ce bloc de base, à l'exception de la première instruction, est masquée à l'aide d'un masque construit à partir de l'instruction qui la précède immédiatement dans ce bloc de base, ce masque construit étant identique au masque construit après l'opération de décodage de l'instruction qui la précède immédiatement lors de l'exécution de ce code machine selon un procédé conforme à l'une quelconque des revendications précédentes.

8. Code machine selon la revendication 7, dans lequel la première instruction du bloc de base est masquée à l'aide du même masque de saut que celui utilisé lors de l'exécution de ce code machine selon un procédé conforme à la revendication 2.

9. Support d'enregistrement d'informations lisible par un microprocesseur, **caractérisé en ce qu'**il comporte un code machine conforme à l'une quelconque des revendications 7 à 8.

10. Microprocesseur pour la mise en œuvre d'un procédé d'exécution conforme à l'une quelconque des revendications 1 à 6, ce microprocesseur comportant une chaîne matérielle (10) de traitement d'instructions, cette chaîne matérielle de traitement comportant les étages suivants : un chargeur d'instructions (18), un décodeur (20) et une unité arithmétique et logique (22), cette chaîne matérielle de traitement étant apte, pour chaque instruction du code machine à exécuter, à exécuter successivement les opérations suivantes :
- le chargement, par le chargeur d'instructions, de l'instruction désignée par un compteur ordinal pour obtenir une instruction chargée, puis
- le décodage de l'instruction chargée, par le décodeur, pour générer des signaux qui configurent le microprocesseur pour exécuter l'instruction chargée, puis,
- l'exécution, par l'unité arithmétique et logique, de l'instruction chargée,
**caractérisé en ce que** la chaîne matérielle de traitement comporte aussi un module matériel (28) de démasquage apte à réaliser les opérations suivantes :
- après l'opération de décodage d'une instruction chargée courante, la construction d'un masque à partir des signaux générés par le décodeur en réponse au décodage de cette instruction chargée courante, ce masque construit variant ainsi en fonction de l'instruction chargée courante, puis
- avant l'opération de décodage de la prochaine instruction chargée, le démasquage de la prochaine instruction chargée à l'aide du masque construit.

11. Compilateur apte à transformer automatiquement un code source d'un programme d'ordinateur en un code binaire comportant un code machine exécutable par un microprocesseur comportant une chaîne matérielle de traitement d'instructions, cette chaîne matérielle de traitement comportant les étages suivants : un chargeur d'instructions, un décodeur et une unité arithmétique et logique, **caractérisé en ce que** le compilateur est apte à transformer automatiquement le code source en un code machine conforme à la revendication 7 ou 8.

12. Compilateur selon la revendication 11, dans lequel le compilateur est apte à insérer automatiquement une instruction de branchement inconditionnel qui provoque un saut unitaire, dans le code machine, immédiatement avant chaque instruction du code machine qui est la destination d'une instruction de branchement qui, lorsqu'elle est exécutée par l'unité arithmétique et logique, provoque un saut de plusieurs instructions.
